Europäisches Patentamt

European Patent Office

Office européen des brevets

(11) Veröffentlichungsnummer: **0 440 283 A2**

(12) **EUROPÄISCHE PATENTANMELDUNG**

(21) Anmeldenummer: 91200105.4

(22) Anmeldetag: 21.01.91

(51) Int. Cl.⁵: **G06F 1/03**, //G06F101:04

(30) Priorität: 31.01.90 DE 4002737

(43) Veröffentlichungstag der Anmeldung:
07.08.91 Patentblatt 91/32

(84) Benannte Vertragsstaaten:
**DE FR GB**

(71) Anmelder: **Philips Patentverwaltung GmbH**
**Wendenstrasse 35 Postfach 10 51 49**
**W-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **FR GB**

(72) Erfinder: **Koken, Claus**
**Stellauer Hauptstrasse 19**
**W-2000 Barsbüttel(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**W-2000 Hamburg 1(DE)**

(54) **Mehrkanaliger Sinussynthesator.**

(57) Die Erfindung betrifft einen mehrkanaligen Sinussynthesator zur Primärsignalerzeugung in Meßsignalgeneratoren mit einem Phasenakkumulator (11), einem Tiefpaß (12), einem zwischengeschalteten ersten Synthesekanal (13) und einer Taktsteuereinheit (25) zur Umsetzung eines am Phasenakkumulator (11) anliegenden Phaseninkrements in ein Sinussignal. Bei derartigen Synthesatoren besteht das Problem einer verhältnismäßig geringen maximalen Frequenz des zu erzeugenden Sinussignals, da diese durch Alias-Frequenzeffekte begrenzt ist, weshalb zur Erhöhung der maximalen Frequenz bei gleicher Taktfrequenz vorgesehen ist, daß parallel zum Synthesekanal (13) mindestens ein weiterer zeitlich versetzt arbeitender modifzierter Synthesekanal (26) angeordnet ist, an dem eingangsseitig zusätzlich ein bei gegebener Frequenz konstanter additiver Phasenwert anliegt und daß über die Taktsteuereinheit (25) jeder weitere Synthesekanal (26) ein individuell zeitversetztes Taktsignal erhält, so daß am Ausgang eines Summierers (15) ein Sinussignal entsteht, das eine gegenüber dem einkanaligen Synthesator (13) um ein wesentliches erhöhte maximale Frequenz aufweist, wobei die wirksame (Nyquist-)Abtastrate proportional der parallelen Synthesekanäle (26) angehoben ist und eine ausreichende Abschwächung der Aliasfrequenzkomponenten mit dem Tiefpaß (12) erzielt wird.

F IG.4

## MEHRKANALIGER SINUSSYNTHESATOR

Die vorliegende Erfindung betrifft einen mehrkanaligen Sinussynthesator zur Primärsignalerzeugung in Meßsignalgeneratoren mit einem Phasenakkumulator, einem Tiefpaß, einem zwischengeordneten Synthesekanal und einer Taktsteuereinheit zur Umsetzung eines am Phasenakkumulator anliegenden Phaseninkrements in ein Sinussignal.

Synthesatoren dieser Art, also Sinusgeneratoren, die auf dem Prinzip der digitalen Signalsynthese basieren, sind bekannt. Aus der Zeitschrift Elektronik 1976, Heft 11, Seiten 106 bis 110 sind Prinzipien digitaler Synthesatoren bekannt. Derartige Synthesatoren weisen einen digitalen Phasenakkumulator, einen Synthesekanal und einen analogen Tiefpaß auf. Der Synthesekanal kann als Reihenschaltung aus einem Sägezahn-/Sinus-Umsetzer und einem Digital-/ Analog-Umsetzer (DAU) aufgebaut sein. Ein normiertes Phaseninkrement wird durch den Phasenakkumulator in eine Folge von Phasenwerten umgesetzt. Die Fortschaltrate ist dabei die Taktfrequenz einer Taktsteuereinheit. Aufgrund des endlichen Wertebereichs des Phasenakkumulators entsteht eine wertmäßig sägezahnförmig verlaufende Folge von Phasenwerten am Ausgang des Phasenakkumulators. Bei vorgegebener Taktfrequenz bestimmt somit das Phaseninkrement die Ausgangsfrequenz des Sinussignals. Folglich wird bei frequenzvariablen Sinussynthesatoren die Ausgangsfrequenz, die mit der Grundfrequenz der sägezahnförmigen Folge von Phasenwerten identisch ist, proportional über das Phaseninkrement gesteuert. Der Sägezahn-/Sinus-Umsetzer überführt die einzelnen eingangsseitig anliegenden Elemente der Folge von Phasenwerten in korrespondierende Sinusfunktionswerte. Der Digital-/Analog-Umsetzer setzt diese Sinusfunktionswerte in linear zugeordnete Spannungs- oder Stromwerte um. Das resultierende Ausgangssignal stellt eine Abtast-Halte-Funktion eines Sinussignals dar, da die einzelnen Stützwerte innerhalb der Abtastperiode konstant gehalten werden. Zweckmäßigerweise wird dies mittels eines getakteten Übernahmespeichers des Digital-/Analog-Umsetzers realisiert. Für ein Phaseninkrement ø, das größer oder gleich 1, d.h. dem geringstwertigen Bit (LSB) des Phasenakkumulatorausgangs, ist, sind Abtast- und Taktperiode identisch. Die Nutzamplitude des Sinussignals ist dabei gemäß $\sin(\pi f_N/f_T)/(\pi f_N/f_T)$ vom Verhältnis der Nutzfrequenz $f_N$ zur Taktfrequenz $f_T$ abhängig. Der Tiefpaß am Ausgang des Synthesators dient zur Abschwächung der im Ausgangssignal des Digital-/Analog-Umsetzers enthaltenen Aliasfrequenzkomponenten. Die zugleich stärkste und in der Frequenz niedrigste Komponente liegt bei einer aus der Differenz von Taktfrequenz $f_T$ und Nutzfrequenz

$f_N$ gebildeten Frequenz. Für die bei vertretbarem filtertechnischen Aufwand ausreichende Abschwächung wird als maximale Nutzfrequenz $f_{Nmax}$ frequenzvariabler Synthesatoren im allgemeinen etwa ein Viertel der Taktfrequenz $f_T$ festgelegt, so daß die kritische Aliasfrequenz mindestens das Doppelte der maximalen Nutzfrequenz $f_{Nmax}$ beträgt und somit eine Frequenzoktave oberhalb der Maximalfrequenz liegt. Die relative Nutzamplitude beträgt dann gemäß der oben angegebenen Formel etwa 91 % von der Nutzamplitude bei tiefen Frequenzen. Ein Amplitudenausgleich auf 100 % kann bei frequenzvariablen Synthesatoren durch Höhenanhebung des Tiefpasses im Durchlaßbereich erfolgen. Eine Erhöhung der Nutzfrequenz $f_{Nmax}$ über z.B. $f_T/4$ bei zusätzlichem Amplitudenausgleich ist wegen der Annäherung an die kritische Aliasfrequenz $f_T$-$f_N$max begrenzt.

Aus der europäischen Patentschrift 0 078 588 ·(entsprechend US 4 454 486) ist eine Vorrichtung und ein Verfahren zum Synthesieren einer Signalform bekannt. Bei dieser Variante eines mehrkanaligen Synthesators wird mittels einer Kombination von zeitlich versetzten digitalen Signalen letztlich ein Hochfrequenzausgangssignal erzeugt, in dem die zeitlich versetzten digitalen Signale einem Multiplexer zugeführt werden und letztlich anschließend über einen Digital-/Analog-Umsetzer in das gewünschte Signal umgesetzt werden. Bei einem solchen digitalen Synthesator werden bezüglich der Dynamik an den Multiplexer und an den Digital-/Analog-Umsetzer umso höhere Anforderungen gestellt, je größer die Anzahl der abgetasteten Kanäle ist. Insbesondere muß die Umsetzzeit des Digital-/Analog-Umsetzers an die Abtastperiode des Multiplexers angepaßt sein.

Der Erfindung liegt die Aufgabe zugrunde, einen mehrkanaligen Sinussynthesator zu schaffen, der bei annähernd unveränderten dynamischen Anforderungen an den Synthesekanal und bei vorgegebener Taktfrequenz eine wesentliche Erhöhung der maximalen Frequenz des zu erzeugenden Sinussignals gewährleistet.

Diese Aufgabe wird erfindungsgemäß dadurch gelöst, daß parallel zum zwischengeschalteten Synthesekanal mindestens ein ausgangsseitig über einen Summierer angeschlossener weiterer zeitlich versetzt arbeitender modifizierter Synthesekanal angeordnet ist, an dem eingangsseitig außerdem ein frequenzabhängig konstanter Phasenwert anliegt, der über die Taktsteuereinheit ein zeitlich angepaßtes Taktsignal erhält, und daß das Sinussignal eine in Abhängigkeit der parallelen Synthesekanäle gegenüber dem einkanaligen Synthesekanal erhöhte maximale Frequenz aufweist.

Der erfindungsgemäße mehrkanalige Sinussynthesator gestattet eine wesentliche Erhöhung der maximalen Nutzfrequenz $f_{Nmax}$ gegenüber einem Viertel der Taktfrequenz $f_T$, da die kritische niedrigste Aliasfrequenz von $f_T-f_{Nmax}$ auf $Kf_T-f_{Nmax}$ angehoben wird, wobei K die Anzahl der parallel geschalteten Synthesekanäle darstellt. Die praktisch ausgenutzte Erhöhung der Nutzfrequenz $f_N$ hängt von der noch akzeptalen Degradierung der Nutzamplitude bei $f_N$ gemäß $\sin(\pi f_N/f_T)/(\pi f_N/f_T)$ ab. Bei frequenzvariablen Synthesatoren kann eine Verdopplung der Maximalfrequenz mit K = 2 oder K = 3 und höchsten eine Verdreifachung mit K = 3 oder K = 4 ausreichen, so daß im ersten Fall mit einer maximalen Nutzfrequenz $f_{Nmax}$ entsprechend der halben Taktfrequenz $f_T$ ein Amplitudenabfall bis auf ca. 64 % und im zweiten Fall mit einer maximalen Nutzfrequenz $f_{Nmax}$ von dreiviertel der Taktfrequenz $f_T$ ein Amplitudenabfall bis auf 30 % ausgeglichen werden muß.

Erfindungsgemäß weist jeder Synthesekanal einen Sägezahn-/Sinus-Umsetzer und einen Digital-/Analog-Umsetzer mit einem getakteten Übernahmespeicher auf. Jeder der parallel geschalteten Synthesekanäle weist einen Sägezahn-/Sinus-Umsetzer auf, dem ein Addierglied vorgeschaltet ist. Die parallel geschalteten Synthesekanäle arbeiten mit zeitlich unterschiedlich verzögerten Abtastungen.

Gemäß einer bevorzugten Ausgestaltung der Erfindung liegt am Eingang eines jeden parallelen Synthesekanals ein individueller Phasenwert ø gemäß (i -1) ø/K an, wobei ø das am Phasenakkumulator anliegende Phaseninkrement ist und i = 1, 2, 3,...,K) eine laufende Numerierung der Synthesekanäle darstellt. Der Tiefpaß ist eingangsseitig über ein Summenglied mit den Ausgängen der Synthesekanäle verbunden. Die Taktung der Übernahmespeicher der Digital-/Analog-Umsetzer erfolgt zeitversetzt gemäß (i-1)$T_T$/K, wobei $T_T$ = 1/$f_T$ die Taktperiode darstellt.

Vorteilhaft können in den Synthesekanälen weitere Auffangspeicher bzw. Übernahmespeicher angeordnet sein, um eine fehlerfreie Taktung zu gewährleisten.

Vorteilhaft kann ferner vorgesehen sein, daß die Sägezahn-/Sinus-Umsetzer als Lesespeicher (ROM's) oder Schreib-Lese-Speicher (RAM's) ausgeführt sind, wodurch auch beliebige andere Signal-Zeit-Funktionen als sinusförmige Funktionen synthetisiert werden können.

Gemäß einer besonderen Ausgestaltung der Erfindung taktet die Taktsteuereinheit den Phasenakkumulator und die Synthesekanäle und gibt an die Übernahmespeicher der Digital-/Analog-Umsetzer ein um (i - 1) $T_T$/K für jeden i-ten Synthesekanal verzögertes Taktsignal ab.

Vorteilhaft kann vorgesehen sein, daß das Addierglied eine subtrahierende Funktion aufweist. In diesem Fall taktet die Taktsteuereinheit letztlich den i-ten Synthesekanal um (K - i) $T_T$/K verzögert.

Gemäß einer weiteren alternativen, bevorzugten Ausgestaltung der Erfindung versorgt die Taktsteuereinheit den Phasenakkumulator mit einem Taktsignal und die Synthesekanäle mit zeitgleichen Taktsignalen, wobei zur zeitlichen Verzögerung der Synthesekanäle untereinander den parallelen Synthesekanälen je ein analoges Totzeitglied mit der Taktzeit (i-1)$T_T$/K zugeordnet ist.

Vorteilhaft kann jedes Totzeitglied als Verzögerungsleitung mit verteilten passiven Netzwerkelementen dL/dx und dC/dx ausgebildet sein. L steht für Induktivität, C für Kapazität und dx für eine differentielle Längeneinheit.

Vorteilhaft sind die Anstiegs- und Abfallzeiten der Digital-/Analog-Umsetzer klein gegenüber dem Quotienten aus der Taktsignalperiode $T_T$ und dem Faktor K zu wählen, um eine Verringerung der Nutzamplitudenausbeute zu vermeiden.

Weitere bevorzugte Ausgestaltungen der Erfindung ergeben sich aus den Unteransprüchen.

Eine Ausführungsbeispiel wird nachfolgend unter Bezugnahme auf eine Zeichnung näher erläutert. Es zeigt:

Fig. 1 einen erfindungsgemäßen zweikanaligen Sinussynthesator mit einer Taktsteuereinheit, die für den verzögerten Kanal ein nacheilendes Taktsignal erzeugt,

Fig. 2 einen erfindungsgemäßen zweikanaligen Synthesator mit einem Totzeitglied für eine Zeitverzögerung,

Fig. 3 zwei Abtasthaltefunktionem vor einem Summierglied am Ausgang der in Fig. 1 und 2 dargestellten Synthesatoren und die Summe dieser Abtasthaltefunktionen, und

Fig. 4 einen erfindungsgemäßen allgemeinen K-kanaligen Sinussynthesator.

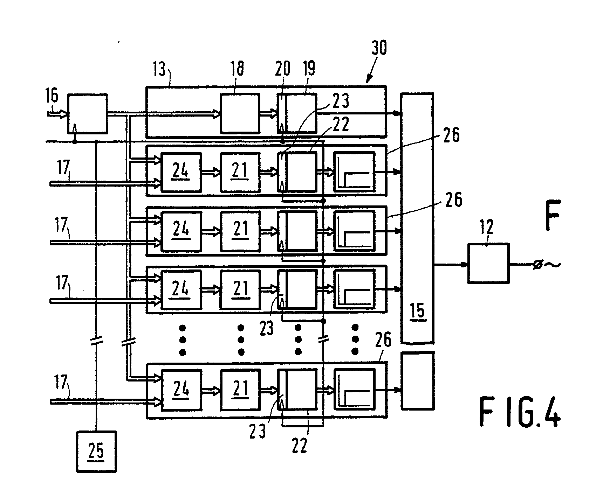

Fig. 1 zeigt einen zweikanaligen Sinussynthesator 10 mit einem ersten zwischen einen Phasenakkumulator 11 und einen Tiefpaß 12 geschalteten Synthesekanal 13, der eingangsseitig das Ausgangssignal des Phasenakkumulators 11 erhält. Parallel zum ersten Synthesekanal 13 ist ein zweiter Synthesekanal 14 angeordnet. Aus der Parallelschaltung ergibt sich, daß der zweite Synthesekanal 14 ebenfalls das Eingangssignal des Synthesekanals 13 erhält und ausgangsseitig mit dem Ausgangssignal des ersten Synthesekanals 13 verknüpft ist. Die Ausgänge der Synthesekanäle 13, 14 sind über ein Summierglied 15 verknüpft.

Das Ausgangssignal des Summierglieds 15 ist mit dem Eingang des Tiefpasses 12 verbunden, an dessen Ausgang das zu erzeugende geglättete Sinussignal ansteht. Das Eingangssignal des Phasenakkumulators ist ein normiertes Phaseninkrement $\phi$, das in den Figuren mit dem Bezugszeichen 16 gekennzeichnet ist. Der zweite Synthesekanal 14 ist eingangsseitig zusätzlich mit einem frequenzabhängigen konstanten Phasenwert beaufschlagt, der in den Figuren mit dem Bezugszeichen 17 gekennzeichnet ist. Bei mehreren parallel hinzugefügten Synthesekanälen sind die Phasenwerte 17 derSynthesekanäle unterschiedlich, wie weiter unten noch näher erläutert wird.

Der erste Synthesekanal 13 umfaßt im wesentlichen eine Reihenschaltung aus einem Sägezahn-/Sinus-Umsetzer 18 und einem Digital-/Analog-Umsetzer 19, dem eingangsseitig ein Übernahmespeicher 20 zugeordnet sein kann.

Der Sägezahn-/Sinus-Umsetzer 18 überführt die ihm zugeführten Signale bzw. Signalwerte, d.h. die Folge von Phasenwerten, in korrespondierende Sinusfunktionswerte. Er kann intern als Lesespeicher (ROM) oder Schreib-Lese-Speicher (RAM) ausgeführt sein, in welchem die Sinusfunktionswerte eingeladen sind. Die ihm zugeführten Phasenwerte repräsentieren dann die Leseadressen dieser Speicher. Durch Speicherung anderer Funktionswerte können auch beliebige andere Signal-Zeit-Funktionen als sinusförmige Funktionen synthetisiert werden.

Der Digital-/Analog-Umsetzer 19 setzt die ihm zugeführten Signale in linear zugeordnete Spannungs- oder Stromwerte um, die innerhalb einer Abtastperiode $T_T$ jeweils konstant gehalten werden. Das resultierende Ausgangssignal $s_1(t)$ repräsentiert eine Abtast-Halte-Funktion einer Sinusschwingung $s_0(t) = A_0 \sin (\omega_N t)$. Ein hierfür notwendiges Halteglied stellt der Übernahmespeicher 20 dar, der am Eingang des Digital-/Analog-Umsetzers 19 angeordnet ist.

Der zweite parallel angeordnete Synthesekanal 14 weist ebenfalls einen Sägezahn-Sinus-Umsetzer 21 und einen nachgeordneten Digital-/Analog-Umsetzer 22 mit einem Übernahmespeicher 23 auf. Diesen Gliedern, die den Gliedern 18, 19 und 20 entsprechen können, ist ein Addierglied 24 vorgeschaltet, welches eingangsseitig mit den bereits beschriebenen Eingangssignalen gespeist wird.

Der erfindungsgemäße zweikanalige Synthesator 10 weist ferner eine Taktsteuereinheit 25 auf, die einerseits die Sägezahn-/Sinus-Umsetzer 18 und 21 und andererseits die Übernahmespeicher 20 und 23 sowie den Phasenakkumulator 11 mit Taktsignalen versorgt.

Am Ausgang des zweiten Synthesekanals 14 wird somit eine zweite Abtast-Halte-Funktion $s_2(t)$ der Sinusschwingung erzeugt. Die Taktsteuereinheit 25 steuert die Abtastungen derart, daß die Abtast-Halte-Funktion $s_2(t)$ gegenüber der Abtast-Halte-Funktion $s_1(t)$ bzw. deren Abtastzeitpunkte um eine halbe Taktperiode $T_T$ verzögert sind. Diese Verzögerung erfolgt dadurch, daß die Übernahmeflanken des Taktsignals $s_T(t - T_T/2)$ für letztlich den Digital-/Analog-Umsetzer 22 um eine halbe Taktperiode, also $T_T/2$ gegenüber den Übernahmeflanken des Takt-signals $s_T(t)$ für letztlich den Digital-/Analog-Umsetzer 19 nacheilen. Die beiden Taktsignale $s_T(t)$ und $s_T (t - T_T/2)$ sowie die Taktsignale für den Phasen-akkumulator 11 und ggf. die Sägezahn-/Sinus-Umsetzer 18 und 21 werden in der Taktsteuereinheit erzeugt. Da die Abtastungen, also die Abtastzeitpunkte vom Synthesekanal 14 denen des Synthesekanals 13 um $T_T/2$ nacheilen, müssen die einzelnen dem Sägezahn-/Sinus-Umsetzer 21 zugeführten Phasenwerte um jeweils $\phi/2$ erhöht werden, also um die Hälfte des Phaseninkrements $\phi$. Dies erfolgt im Addierglied 24. Im Summierglied 15 werden die beiden Abtast-Halte-Funktionen $s_1(t)$ und $s_2(t)$ zusammengeführt. Aus dem Summensignal wird durch eine Tiefpaßfilterung im Tiefpaß 12 das gewünschte Sinussignal mit der Frequenz $f_N$ herausgefiltert, wobei N für Nutzfrequenz steht.

In Fig. 2 ist ein zweikanaliger Sinussynthesator 28 dargestellt, der einer Variante des in Fig. 1 dargestellten zweikanaligen Sinussynthesators 10 entspricht. Diese vorteilhafte Variante des erfindungsgemäßen mehrkanaligen Synthesators unterscheidet sich im wesentlichen nur hinsichtlich der Methode der zeitlichen Verzögerung der Abtastungen bzw. der Abtastzeitpunkte des zweiten Synthesekanals 26, dessen Aufbau sonst dem des Synthesekanals 14 entspricht, gegenüber dem ersten Synthesekanal 13. Die Verzögerung bei dieser Variante erfolgt bei koinzidierenden Taktsignalen für letztlich die Digital-/Analog-Umsetzer 19 und 22 durch ein analoges Totzeitglied 27, das dem Digital-/Analog-Umsetzer 22 nachgeordnet ist. Im übrigen sind die grundsätzlichen Wirkungsweisen identisch.

Vorteile dieses Synthesators 28 gemäß Fig. 2 gegenüber dem gemäß Fig. 1 bestehen darin, daß die wirksame Verzögerungszeit, die möglichst exakt $T_T/2$ sein sollte, nahezu ausschließlich auf passive Netzwerkelemente zurückgeführt werden kann. Hierdurch ist die Verzögerungszeit insbesondere gegenüber Temperatureinflüssen stabiler. Dies ist z.B. der Fall, wenn das Totzeitglied 27 als Verzögerungsleitung mit verteilten passiven Netzwerkelementen dL/dx und dC/dx ausgebildet ist.

Ferner wird das fehlerfreie Timing der beiden Synthesekanälen 13 und 26 vereinfacht, wobei von Vorteil ist, daß sich hinsichtlich der Übertragungszeiten (Propagation Delay Times) die beiden Synthesekanäle 13 und 26 nur hinsichtlich der zusätzlichen Übertragungszeit des Addierglieds 24 im Synthesekanal 26 unterscheiden. Hierbei wird darauf hingewiesen, daß in Anbetracht der Aufgabe einer möglichst hohen maximalen Frequenz $f_N$ des zu erzeugenden Sinussignals die digitalen Schaltkreise der beiden Synthesekanäle 13 und 26 tendenziell dicht bis an die durch Übertragungszeiten und Übergangszeiten jeweils festgelegte Taktfrequenzgrenze betrieben werden. In einigen Fällen kann es daher erforderlich sein, zusätzliche Auffang- bzw. Übernahmespeicher zu den bereits vorhandenen Übernahmespeichern 20 und 23 vorzusehen.

In Fig. 3 sind die beiden Abtast-Halte-Funktionen $s_1(t)$ und $s_2(t)$ für $f_T/f_N = 8$ beispielhaft untereinander dargestellt. Unter der Funktion $s_2(t)$ ist die Abtast-Halte-Funktion $s(t)$ dargestellt, die sich für einen fiktiven Sinussynthesator bei doppelter Takt- und Abtastfrequenz ergibt. Die schraffiert gekennzeichneten Signal-Zeit-Flächen von $s_1(t)$ und $s_2(t)$ setzen sich in der Hüllkurve zu $s(t)$ zusammen. Die verbleibenden Signal-Zeit-Flächen von $s_1(t)$ und $s_2(t)$ sind mit der Signal-Zeit-Fläche von $s(t - T_T/2)$, d.h. einer um $T_T/2$ verzögerten Abtast-Halte-Funktion $s(t)$ der doppelten Abtastfrequenz identisch. Es gilt somit $s_1(t) + s_2(t) = s(t) + s(t - T_T/2)$. Die beiden Synthesekanäle 13 und 14 bzw. 26 des zweikanaligen Sinussynthesators, die in zeitlicher Verschachtelung (Zeitmultiplex) auf das Summierglied 15 wirken, erhöhen also die effektive Abtastrate um den Faktor 2. Im Summensignal sind die Seitenfrequenzen der ungradzahligen Taktfrequenzvielfachen durch Kompensation im Summierglied 15 für die Synthesekanäle 13 und 14 bzw. 26 ausgelöscht. Die kritische Alias-Frequenz ist somit $2f_T - f_N$ anstelle von $f_T - f_N$, wie dies beim Synthesator im Stand der Technik der Fall ist, und die maximale Frequenz kann gegenüber dem Stand der Technik auf den doppelten Wert, also auf $f_Nmax = f_T/2$ angehoben werden.

Die gemäß $\sin(\pi f_N/f_T)/(\pi f_N/f_T)$ resultierende geringere Amplitudenausbeute bei der maximalen Nutzfrequenz $f_{Nmax}$ von 64 % gegenüber 91 % bei $f_{Nmax} = f_T/4$ wird bei frequenzvariablen Synthesatoren durch eine Höhenanhebung des Tiefpasses (12) im Durchlaßbereich erzielt.

Damit keine wesentliche zusätzliche Amplitudengradierung auftritt, müssen die Anstiegs- und Abfallzeiten der Digital-/Analog-Umsetzer gering gegenüber $T_T/2$ bzw. gering gegenüber $T_T/K$ beim K-kanaligen Synthesator sein. Allerdings sind die diesbezüglichen Anforderungen erheblich geringer als beim mehrkanaligen Synthesator nach der eingangs genannten europäischen Patentschrift 0 078 588, da der einzelne Abtastwert jedes Kanals über $T_T$ wirksam ist.

Fig. 4 zeigt den erfindungsgemäßen mehrkanaligen Sinussynthesator 30, der einen inneren Aufbau entsprechend der Variante in Fig. 2 aufweist. Der Phasenwert, der dem i-ten Synthesekanal über das jeweilige Addierglied 24 addiert wird, ist $(i - 1)$ $\phi/K$, wenn der unverzögerte zwischengeschaltete Synthesekanal 13 mit $i = 1$ indiziert wird. Die Totzeiten der korrespondierenden Totzeitglieder 26 sind $(i - 1)$ $T_T/K$. Die wirksame Abtastfrequenz wird gegenüber dem einkanaligen Synthesator von $f_T$ auf $Kf_T$ angehoben, so daß die kritische niedrigste Aliasfrequenz bei $Kf_T - f_{Nmax}$ liegt.

Die in der vorstehenden Beschreibung, in den Figuren sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

**Patentansprüche**

1. Mehrkanaliger Sinussynthesator zur Primärsignalerzeugung in Meßsignalgeneratoren mit einem Phasenakkumulator, einem Tiefpaß, einem zwischengeschalteten Synthesekanal und einer Taktsteuereinheit zur Umsetzung eines am Phasenakkumulator anliegenden Phaseninkrements in ein Sinussignal, dadurch gekennzeichnet, daß parallel zum zwischengeschalteten Synthesekanal (13) mindestens ein ausgangsseitig über einen Summierer (15) angeschlossener weiterer zeitlich versetzt arbeitender modifizierter Synthesekanal (14 bzw. 26) angeordnet ist, an dem eingangsseitig außerdem ein frequenzabhängig konstanter Phasenwert anliegt, der über die Taktsteuereinheit (25) ein zeitlich angepaßtes Taktsignal erhält, und daß das Sinussignal eine in Abhängigkeit der parallelen Synthesekanäle (14 bzw. 26) gegenüber dem einkanaligen Synthesekanal (13) erhöhte maximale Frequenz aufweist.

2. Synthesator nach Anspruch 1, dadurch gekennzeichnet, daß jeder Synthesekanal (13, 14 bzw. 26) einen Sägezahn-/Sinus-Umsetzer (18, 21) und einen Digital-/Analog-Umsetzer (19, 22) mit einem getakteten Übernahmespeicher (20, 23) aufweist, und daß jeder parallele Synthesekanal (14 bzw. 26) ein dem Sägezahn-/Sinusumsetzer (21) vorgeschaltetes Addierglied (24) aufweist und jeder parallele Synthesekanal (14 bzw. 26) mit zeitlich unterschiedlich verzögerten Abtastungen arbeitet.

3. Synthesator nach Anspruch 2, dadurch gekennzeichnet, daß $K - 1 = 1, 2, ...$ zum zwischengeschalteten Synthesekanal (13) parallele Synthesekanäle (14 bzw. 26) angeordnet sind, an denen eingangsseitig je ein individueller Phasenwert gemäß $(i - 1)$ $\phi/K$ anliegt und daß jeder i-te Synthesekanal (14 bzw. 26) eine verzögerte Taktperiode $T_T$ aufweist, wobei $i = 1, 2, 3, ..., K$ die laufende Numerierung der Synthesekanäle (13, 14 bzw.

26) und φ das am Phasenakkumulator anliegende Phaseninkrement darstellt.

4. Synthesator nach Anspruch 3,
dadurch gekennzeichnet, daß zusätzlich zu den Übernahmespeichern (20, 23) in den Synthesekanälen (13, 14 bzw. 26) weitere Auffangspeicher vorgesehen sind, um eine fehlerfreie Taktung zu gewährleisten.

5. Synthesator nach Anspruch 4,
dadurch gekennzeichnet, daß die Sägezahn-/Sinus-Umsetzer (18, 21) als Speicher-Umsetzer, wie z.B. ROM's oder RAM's aufgebaut sind, wodurch beliebige andere Signal-Zeit-Funktionen als sinusförmig synthetisierbar sind.

6. Synthesator nach Anspruch 5,
dadurch gekennzeichnet, daß die Taktsteuereinheit (25) den Phasenakkumulator (11) und die Synthesekanäle (13, 14 bzw. 26) taktet, und an jeden Übernahmespeicher (23) der parallelen Synthesekanäle (14 bzw. 26) zur Verzögerung dieser ein um (i - 1) $T_T$/K verzögertes Taktsignal an den entsprechenden Synthesekanal (14 bzw. 26) abgibt, wobei $T_T$ die Taktperiode darstellt.

7. Synthesator nach Anspruch 5,
dadurch gekennzeichnet, daß die Taktsteuereinheit (25) den Phasenakkumulator (11) und die Synthesekanäle (13, 14 bzw. 26) taktet, und bei subtrahierender Funktion des Addierglieds (24) der i-te Synthesekanal (14 bzw. 26) gegenüber dem K-ten Synthesekanal (14 bzw. 26) um (K - i) $T_T$/K über ein entsprechendes Taktsignal an die Übernahmespeicher (23) verzögert ist.

8. Synthesator nach Anspruch 5,
dadurch gekennzeichnet, daß die Taktsteuereinheit (25) den Phasenakkumulator (11) taktet, an mindestens jeden Übernahmespeicher (20, 23) zeitgleiche Taktsignale abgibt, und daß zur zeitlichen Verzögerung der Kanäle untereinander jedem parallelen Synthesekanal (14 bzw. 26) ein analoges Totzeitglied (27) mit einer Totzeit (i-1)$T_T$/K zugeordnet ist.

9. Synthesator nach Anspruch 8,
dadurch gekennzeichnet, daß das Totzeitglied (27) als Verzögerungsleitung mit verteilten passiven Netzwerkelementen dL/dx und dC/dx aufgebaut ist.

10. Synthesator nach einem oder mehreren der vorhergehenden Ansprüche,

dadurch gekennzeichnet, daß die Steig- und Fallzeiten der Digital-/Analog-Umsetzer klein gegenüber dem Quotienten aus der jeweiligen Taktsignalperiode und dem Faktor K sind.

F IG.4